# EUROPEAN PATENT APPLICATION

(11) **EP 4 671 988 A1**
(43) Date of publication of application: **31.12.2025**
(21) Application number: 24923341.2
(22) Date of filing: 27.09.2024
(51) Int. Cl.: G06F 9/50

(54) **RESOURCE MANAGEMENT METHOD AND APPARATUS, ELECTRONIC DEVICE, AND STORAGE MEDIUM**

(30) Priority: 06.02.2024 CN 202410166870
(71) Applicant: Suzhou Metabrain Intelligent Technology Co., Ltd., Suzhou, Jiangsu 215000 (CN)
(72) Inventor: DONG, Peiqiang, Suzhou, Jiangsu 215000 (CN); LIU, Tiejun, Suzhou, Jiangsu 215000 (CN); CHEN, Sanxia, Suzhou, Jiangsu 215000 (CN)
(74) Representative: Studio Torta S.p.A.
(86) International application number: PCT/CN2024/122027
(87) International publication number: WO 2025/167136

(57) **Abstract**

Embodiments of this application provide a resource management method and apparatus, an electronic device, and a non-volatile readable storage medium, and relate to the field of computer storage technology. The method includes: determining, in response to a target command sent by a host, a command type corresponding to the target command by a bridging device, the command type including an internal memory application command and an internal memory release command; determining, in a case that the target command is the internal memory application command, a first target resource allocated to the host based on an internal memory mapping table, and enabling a first channel between the first target resource and the host, the internal memory mapping table being configured for representing an internal memory allocation and usage status of internal memory devices; and determining, in a case that the target command is the internal memory release command, a second target resource indicated by the internal memory release command, and disabling a second channel between the second target resource and the host. Accordingly, the bridging device is used as a core for resource management and allocation in a resource management system, thereby shortening the processing time required for resource allocation or release, and improving the performance of the resource management system.

## Description

### Cross-Reference to Related Application

This application claims priority to Chinese Patent Application No. 202410166870.X, filed with the China National Intellectual Property Administration on February 6, 2024 and entitled "RESOURCE MANAGEMENT METHOD AND APPARATUS, ELECTRONIC DEVICE, AND STORAGE MEDIUM", which is incorporated herein by reference in its entirety.

### Technical Field

This application belongs to the field of computer storage technology, and in particular, to a resource management method and apparatus, an electronic device, and a non-volatile readable storage medium.

### Background

With the emergence of high demands for data center storage and data processing, to meet resource requirements, optimization and reconstruction are required based on a server hardware architecture. Compute express link (CXL) technology is often employed to achieve the objective of internal memory capacity and bandwidth expansion, as well as internal memory pooling, to increase the resource utilization rate and reduce maintenance costs.

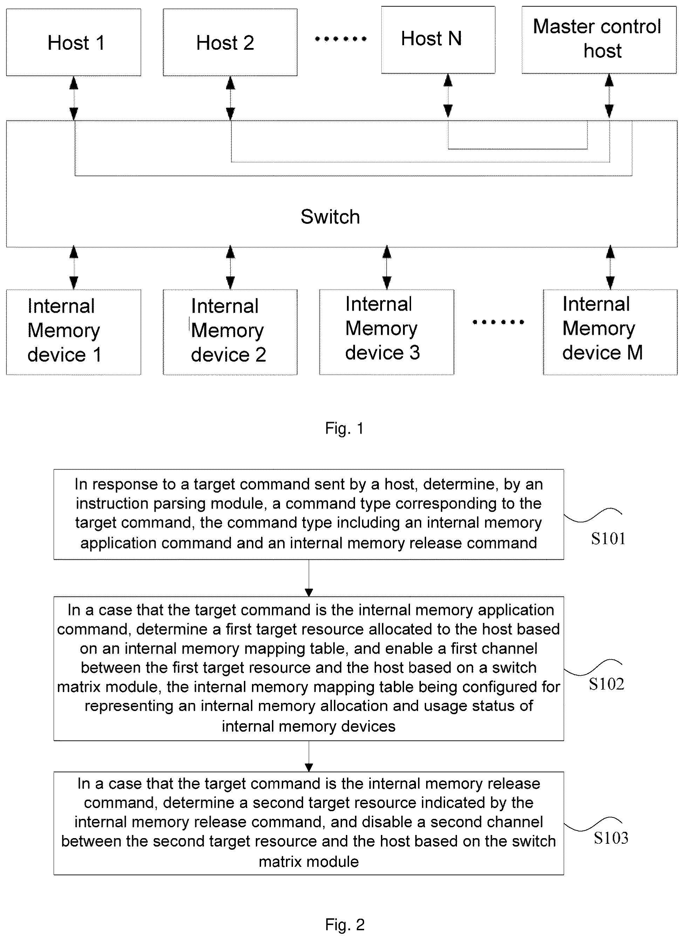

In the related art, as shown in Fig. 1, for an internal memory resource management method after applying the CXL technology, a master control host is typically designated to uniformly manage and allocate all internal memory resources in a system. However, since all hosts (hosts 1 to N) in the system need to send requests to the master control host to acquire or release resources, the resource management approach leads to increased internal memory access latency, causing the degradation of system performance.

### Summary

To solve the problems in the related art, this application provides a resource management method and apparatus, an electronic device, and a non-volatile readable storage medium.

In a first aspect, this application provides a resource management method, applied to a bridging device based on a compute express link (CXL) technology in a resource management system, the bridging device being configured to establish connections between hosts and internal memory devices in the resource management system, and the bridging device including an instruction parsing module, an internal memory mapping table, and a switch matrix module. The method includes:
determining, in response to a target command sent by a host, a command type corresponding to the target command by the instruction parsing module, the command type including an internal memory application command and an internal memory release command;
determining, in a case that the target command is the internal memory application command, a first target resource allocated to the host based on the internal memory mapping table, and enabling a first channel between the first target resource and the host based on the switch matrix module, the internal memory mapping table being configured for representing an internal memory allocation and usage status of the internal memory devices; and
determining, in a case that the target command is the internal memory release command, a second target resource indicated by the internal memory release command, and disabling a second channel between the second target resource and the host based on the switch matrix module.

In some embodiments of this application, the method further includes:
acquiring device information corresponding to the internal memory devices, the device information including a device capacity, a device starting address, and a device identifier corresponding to each internal memory device; and
pre-allocating address spaces for the internal memory devices according to a contiguous allocation rule.

In some embodiments of this application, the determining, in response to a target command sent by the host, a command type corresponding to the target command by the instruction parsing module includes:
determining, by the instruction parsing module, that the command type corresponding to the target command is the internal memory application command in a case that a specified field in the target command is a first field; and
determining, by the instruction parsing module, that the command type corresponding to the target command is the internal memory release command in a case that the specified field in the target command is a second field.

In some embodiments of this application, the determining a first target resource allocated to the host based on the internal memory mapping table includes:
acquiring the internal memory mapping table and acquiring internal memory allocation information based on the internal memory mapping table; and
determining the first target resource from the internal memory resources corresponding to the internal memory devices based on the internal memory allocation information and applied internal memory information carried in the target command.

In some embodiments of this application, the method further includes:
dividing the internal memory resources corresponding to the internal memory device into at least two internal memory blocks based on a first granularity; and
dividing, for any internal memory block, the internal memory block into at least two sub-internal memory blocks based on a second granularity, the first granularity being greater than the second granularity.

In some embodiments of this application, the applied internal memory information includes an applied internal memory size; and the determining the first target resource from internal memory resources corresponding to the internal memory devices based on the internal memory allocation information and applied internal memory information carried in the target command includes:
determining internal memory blocks to be allocated and sub-internal memory blocks to be allocated based on the internal memory allocation information;
in a case that an internal memory size of a target sub-internal memory block among the sub-internal memory blocks to be allocated is greater than or equal to the applied internal memory size, determining the target sub-internal memory block as the first target resource; and
in a case that an internal memory size of any sub-internal memory block to be allocated is smaller than the applied internal memory size, and an internal memory size of a target internal memory block in the internal memory blocks to be allocated is greater than or equal to the applied internal memory size, determining the target internal memory block as the first target resource.

In some embodiments of this application, the determining the first target resource from internal memory resources corresponding to the internal memory devices based on the internal memory allocation information and applied internal memory information carried in the target command includes:
in a case that internal memory sizes of any sub-internal memory block to be allocated and any internal memory block to be allocated are smaller than the applied internal memory size, determining a specified internal memory resource as the first target resource, the specified internal memory resource including: at least two sub-internal memory blocks to be allocated, at least two internal memory blocks to be allocated, or the at least two internal memory blocks to be allocated and the at least two sub-internal memory blocks to be allocated.

In some embodiments of this application, after the determining a first target resource allocated to the host based on the internal memory mapping table and the enabling a first channel between the first target resource and the host based on the switch matrix module, the method further includes:
marking, based on a first label, the first target resource in the internal memory mapping table as an allocated state; and
updating the internal memory mapping table based on first resource information corresponding to the first target resource.

In some embodiments of this application, the first resource information includes a host identifier corresponding to the host, a starting address corresponding to the first target resource, an internal memory device identifier corresponding to the first target resource, and the applied internal memory size.

In some embodiments of this application, the enabling a first channel between the first target resource and the host based on the switch matrix module includes:
sending a first signal to the switch matrix module,
the first signal being configured for enabling the first channel between the first target resource and the host.

In some embodiments of this application, the first target resource is configured for allowing the host to access and write to the first target resource.

In some embodiments of this application, the method further includes:
regularly acquiring usage state information of at least two internal memory blocks and at least two sub-internal memory blocks in the resource management system, and updating the internal memory mapping table based on the usage state information.

In some embodiments of this application, the method further includes:
configuring a specified internal memory block among the at least two internal memory blocks or a specified sub-internal memory block among the at least two sub-internal memory blocks as a shared internal memory space, the shared internal memory space being configured for data forwarding by at least two hosts.

In some embodiments of this application, the determining a second target resource indicated by the internal memory release command, and disabling a second channel between the second target resource and the host based on the switch matrix module includes:
acquiring internal memory address information carried in the target command and configured for indicating the second target resource; and
disabling, based on the internal memory address information, the second channel between the second target resource and the host through the switch matrix module.

In some embodiments of this application, after the determining a second target resource indicated by the internal memory release command, and disabling a second channel between the second target resource and the host based on the switch matrix module, the method further includes:
marking, based on a second label, the second target resource in the internal memory mapping table as an unallocated state; and
deleting second resource information corresponding to the second target resource from the internal memory mapping table.

In some embodiments of this application, the disabling, based on the internal memory address information, the second channel between the second target resource and the host through the switch matrix module includes:
determining the second target resource based on the internal memory address information, and sending a second signal to the switch matrix module, the second signal being configured for disabling the second channel between the second target resource and the host.

In some embodiments of this application, the method further includes:
if it is detected that any allocated internal memory block or allocated sub-internal memory block is not occupied for a preset duration, sending a release request to a target host corresponding to the allocated internal memory block or the allocated sub-internal memory block,
where the allocated internal memory block is an internal memory block marked with the first label in the internal memory mapping table, and the allocated sub-internal memory block is a sub-internal memory block marked with the first label in the internal memory mapping table; and the release request is configured for requesting the target host to send an internal memory release command for the allocated internal memory block or the allocated sub-internal memory block to the bridging device.

In a second aspect, this application provides a resource management apparatus, applied to a bridging device based on a CXL technology in a resource management system, the bridging device being configured to establish connections between hosts and internal memory devices in the resource management system, and the bridging device including an instruction parsing module, an internal memory mapping table, and a switch matrix module. The apparatus includes:
a first determination module, configured to, in response to a target command sent by a host, determine, by the instruction parsing module, a command type corresponding to the target command, the command type including an internal memory application command and an internal memory release command;
a second determination module, configured to determine, in a case that the target command is the internal memory application command, a first target resource allocated to the host based on the internal memory mapping table, and enable a first channel between the first target resource and the host based on the switch matrix module, the internal memory mapping table being configured for representing an internal memory allocation and usage status of the internal memory devices; and
a third determination module, configured to determine, in a case that the target command is the internal memory release command, a second target resource indicated by the internal memory release command, and disable a second channel between the second target resource and the host based on the switch matrix module.

In a third aspect, this application provides an electronic device, including a processor, a memory, and a computer program stored on the memory and runnable on the processor. The processor, when executing the program, implements any one of the resource management methods in the first aspect above.

In a fourth aspect, this application provides a non-volatile readable storage medium, when Instructions in the non-volatile readable storage medium executed by a processor of an electronic device, cause the electronic device to perform the steps of the resource management method in any one of the embodiments in the first aspect above.

In the embodiments of this application, the bridging device determines the command type corresponding to the target command in response to the target command sent by a host, where the command type includes the internal memory application command and the internal memory release command; in the case that the target command is the internal memory application command, the first target resource allocated to the host is determined based on the internal memory mapping table, and the first channel between the first target resource and the host is enabled, where the internal memory mapping table is configured for representing the internal memory allocation and usage status of the internal memory devices; and in the case that the target command is the internal memory release command, the second target resource indicated by the internal memory release command is determined, and the second channel between the second target resource and the host is disabled. Accordingly, by using the bridging device as a core for resource management and allocation in the entire resource management system, the target command sent by the host is directly processed and parsed by the bridging device, and the bridging device achieves direct resource allocation or release. Compared to command parsing and resource allocation and management performed by a master control host, the resource management method provided in the embodiments of this application may shorten the processing time required for resource allocation or release, thereby improving the performance of the resource management system to a certain extent.

### Brief Description of the Drawings

In order to describe technical solutions in the embodiments of this application or in the prior art more clearly, the accompanying drawings required to be used in descriptions of the embodiments or the prior art will be briefly introduced below, it is apparent that the accompanying drawings described below are some embodiments of this application, and those of ordinary skill in the art may also obtain other accompanying drawings according to these accompanying drawings without creative work.
Fig. 1 is a schematic diagram of a resource management method in the prior art according to an embodiment of this application;
Fig. 2 is a step flowchart of a resource management method according to an embodiment of this application;
Fig. 3 is a schematic diagram of an architecture of a resource management system according to an embodiment of this application;
Fig. 4 is a flowchart of specific steps of a resource management method according to an embodiment of this application;
Fig. 5 is a structural diagram of a resource management apparatus according to an embodiment of this application; and
Fig. 6 is a structural diagram of an electronic device according to an embodiment of this application.

### Detailed Description of the Embodiments

The technical solutions in embodiments of this application are clearly and completely described below in combination with accompanying drawings in the embodiments of this application. Apparently, the described embodiments are merely some rather than all of the embodiments of this application. Based on the embodiments in this application, all other embodiments obtained by those of ordinary skill in the art without creative efforts shall fall within the scope of protection of this application.

Fig. 2 is a step flowchart of a resource management method according to an embodiment of this application, applied to a bridging device based on a compute express link (CXL) technology within a resource management system.

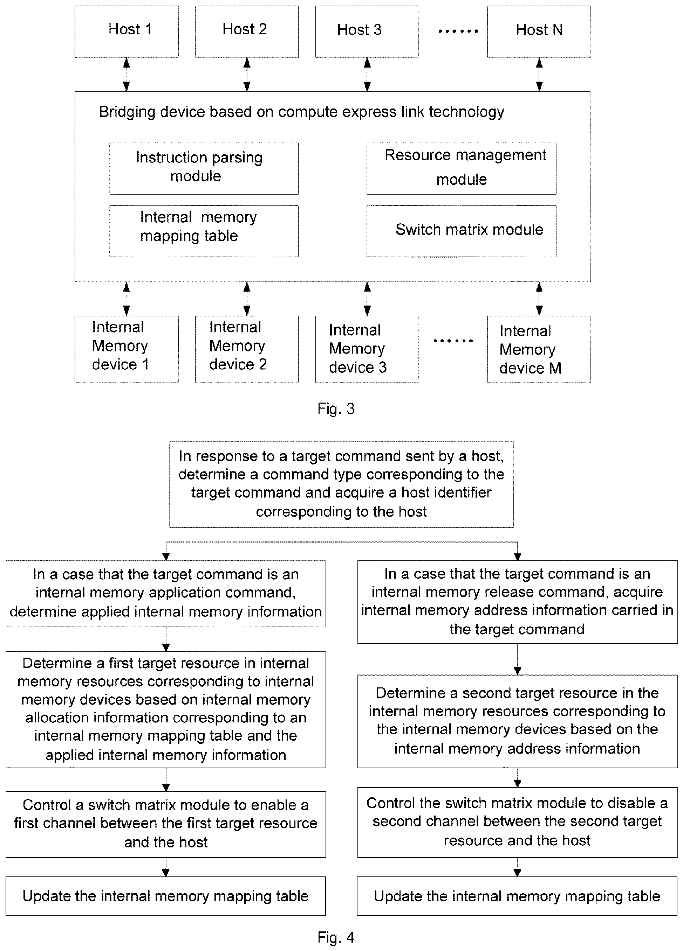

In this embodiment of this application, the resource management system may include a bridging device based on the CXL technology (e.g., a compute express link switch (CXL SWITCH )), hosts, and internal memory devices. The bridging device may connect the hosts and the internal memory devices based on the CXL technology to obtain an internal memory resource pool, thereby achieving internal memory resource pooling. The bridging device, also referred to as a switch, may be configured with modules such as an instruction parsing module, a resource management module, an internal memory mapping table, and a switch matrix module. The instruction parsing module may be configured to process and parse a target command received by the bridging device. The resource management module may be configured to perform operations such as allocation, recording, recycling, and management on resources. The internal memory mapping table is configured to record an internal memory allocation and usage status of the plurality of internal memory devices. The switch matrix module is configured to enable or disable physical connections between the hosts and internal memory resources. The host may be any CXL primary device, including a central processing unit (CPU), a graphics processing unit (GPU), a compute unit, or the like. All requests sent by the hosts in the resource management system may be uniformly processed by the bridging device. The internal memory device may be any CXL-extended memory (MEM), which may be specifically maintained by the resource management module. Exemplarily, Fig. 3 illustrates a schematic diagram of an architecture of a resource management system. As shown in Fig. 3, the bridging device (e.g., CXL SWITCH 2.0) includes the instruction parsing module, the resource management module, the internal memory mapping table, and the switch matrix module. The bridging device is configured to connect hosts 1 to N with internal memory devices 1 to M.

In a possible implementation, the bridging device based on the CXL technology may be deployed in a field programmable gate array (FPGA). In other words, the resource management method provided in this embodiment of this application may be implemented based on the FPGA.

As shown in Fig. 2, the method may include:
Step 101: In response to a target command sent by a host, determine, by the instruction parsing module, a command type corresponding to the target command, the command type including an internal memory application command and an internal memory release command.

In this embodiment of this application, in a case that the host needs to acquire or release the internal memory resources, the target command may be sent to the bridging device. It should be understood that in a case that the host needs to acquire the internal memory resources, the target command sent to the bridging device is the internal memory application command; and in a case that the host needs to release the internal memory resources, the target command sent to the bridging device is the internal memory release command. Moreover, the internal memory application command may carry applied internal memory information about internal memory resources that the host needs to acquire. Similarly, the internal memory release command may carry internal memory address information corresponding to internal memory resources that the host needs to release.

The bridging device may receive, based on ports, CXL input/output interface (CXL.IO) data packets, such as target commands. Each port may be configured with a first in first out (FIFO) rule to prevent data packet loss when the plurality of hosts send target commands simultaneously. In response to the target command sent by any host in the resource management system to the bridging device, the bridging device may parse the target command through the instruction parsing module to determine a command type corresponding to the target command. The command type corresponding to the target command may include the internal memory application command and the internal memory release command. The internal memory application command is configured to request the acquisition of resources from the resource pool composed of the plurality of internal memory devices, while the internal memory release command is configured to request the release of specified resources (e.g., a second target resource) from the resource pool composed of the plurality of internal memory devices. Further, the internal memory application command may include a read command and/or a write command, which is not limited in this embodiment of this application.

Step 102: In a case that the target command is the internal memory application command, determine a first target resource allocated to the host based on the internal memory mapping table, and enable a first channel between the first target resource and the host based on the switch matrix module, the internal memory mapping table being configured for representing an internal memory allocation and usage status of the internal memory devices.

In this embodiment of this application, in a case that the bridging device determines that the target command is the internal memory application command, the target command is further parsed to determine applied internal memory information indicated by the target command. The applied internal memory information is configured for representing demand information of the host for the internal memory resources. Exemplarily, the applied internal memory information may be configured to describe a capacity of an internal memory applied by the host. The first target resource that meets the applied internal memory information and needs to be allocated to the host is determined based on the internal memory mapping table. The internal memory mapping table may record the internal memory allocation and usage statuses corresponding to the plurality of internal memory devices, including marks for allocated internal memory resources and unallocated internal memory resources, internal memory device information and internal memory information corresponding to the internal memory resources, allocation information corresponding to the allocated internal memory resources, usage information corresponding to used internal memory resources, and historical allocation information corresponding to the unallocated internal memory resources. After determining the first target resource allocated to the host, the bridging device may enable the first channel between the first target resource and the host based on the switch matrix module in the bridging device, thereby enabling a physical connection between the host sending the internal memory application command and an internal memory device corresponding to the first target resource, and thus completing resource allocation to the host. The first channel may refer to an electrical signal pathway. It should be understood that after enabling the first channel between the first target resource and the host, the host may communicate with the downstream allocated internal memory device through a communication protocol (e.g., CXL.MEM protocol) to access and write to the first target resource.

Step 103: In a case that the target command is the internal memory release command, determine a second target resource indicated by the internal memory release command, and disable a second channel between the second target resource and the host based on the switch matrix module.

In this embodiment of this application, in a case that the bridging device determines that the target command is the internal memory release command, the target command is further parsed to determine internal memory information corresponding to the second target resource indicated by the target command, where the internal memory information may include resource index information for looking for and determining the second target resource, such as internal memory identification information or internal memory address information corresponding to the second target resource. In other words, the internal memory information corresponding to the second target resource is configured to determine the second target resource requested for release by the host from the internal memory resource pool formed in the resource management system. In a case of determining the second target resource, the second channel between the second target resource and the host is disabled based on the switch matrix module in the bridging device, thereby disabling a physical connection between the host sending the internal memory release command and an internal memory device corresponding to the second target resource, and thus completing the release of the second target resource. The second channel may refer to an electrical signal pathway.

In summary, in this embodiment of this application, the bridging device determines the command type corresponding to the target command in response to the target command sent by the host, where the command type includes the internal memory application command and the internal memory release command; in the case that the target command is the internal memory application command, the first target resource allocated to the host is determined based on the internal memory mapping table, and the first channel between the first target resource and the host is enabled, where the internal memory mapping table is configured for representing the internal memory allocation and usage status of the internal memory devices; and in the case that the target command is the internal memory release command, the second target resource indicated by the internal memory release command is determined, and the second channel between the second target resource and the host is disabled. Accordingly, by using the bridging device as a core for resource management and allocation in the entire resource management system, the target command sent by the host is directly processed and parsed by the bridging device, and the bridging device achieves direct resource allocation or release. Compared to command parsing and resource allocation and management performed by the master control host, the resource management method provided in this embodiment of this application may shorten the processing time required for resource allocation or release, thereby improving the performance of the resource management system to a certain extent.

In some embodiments of this application, this embodiment of this application may further include the following steps:
Step 201: Acquire device information corresponding to the internal memory devices, the device information including a device capacity, a device starting address, and a device identifier corresponding to each internal memory device.

In this embodiment of this application, the device information corresponding to each internal memory device in the resource management system is acquired, where the device information may include the device capacity, the device starting address, and the device identifier corresponding to each internal memory device. The device capacity represents an actual capacity corresponding to the internal memory device, the device starting address represents starting address information corresponding to internal memory resources within the internal memory device, and the device identifier represents identification information corresponding to the internal memory device, such as a device number.

Step 202: Pre-allocate address spaces for the internal memory devices according to a contiguous allocation rule.

In this embodiment of this application, after a hardware device is physically powered on, physical link initialization is performed. By traversing the number of downstream internal memory devices and sequentially reading configuration spaces on the internal memory devices, information such as a starting address and size corresponding to each internal memory device is set according to the configuration space and registered in the resource management system. Specifically, the contiguous address space is pre-allocated for each internal memory device in the resource management system according to the contiguous allocation rule. The contiguous allocation rule may include performing contiguous and unified addressing of the plurality of internal memory devices based on respective internal memory capacities corresponding to the plurality of internal memory devices in the resource management system. Exemplarily, the address spaces are contiguously allocated for all the internal memory devices in the resource management system according to capacities. Suppose there are three 1-gigabyte (GB) internal memory devices: A, B, and C. The address space for the internal memory device A may range from 0x0000_0000 to 0x400_0000, the address space for the internal memory device B may range from 0x4000_0000 to 0x800_0000, and the address space for the internal memory device C may range from 0x8000_0000 to 0xC000_0000.

In this embodiment of this application, by pre-allocating the address space for each internal memory device according to the contiguous allocation rule, unified addressing of the internal memory devices in the resource management system is achieved, thereby avoiding the failure of subsequent resource allocation and release processes due to internal memory address conflicts and improving the convenience of internal memory resource allocation and release.

In some embodiments of this application, step 101 may include the following steps:
Step 301: Determine, by the instruction parsing module, that the command type corresponding to the target command is the internal memory application command in a case that a specified field in the target command is a first field.

In this embodiment of this application, since data transmission in the resource management system follows a CXL protocol and the data packets have a standard data format, the command type corresponding to the target command may be determined based on field content in the target command. In the case that the specified field in the target command is the first field, the instruction parsing module may determine that the command type corresponding to the target command is the internal memory application command. The specified field may be a type field, and the first field may represent a field requesting resource allocation. Exemplarily, the first field may include 000 or 001, where the field "000" may represent a read command and the field "001" may represent a write command.

Step 302: Determine, by the instruction parsing module, that the command type corresponding to the target command is the internal memory release command in a case that the specified field in the target command is a second field.

In this embodiment of this application, in the case that the specified field in the target command is the second field, the instruction parsing module may determine that the command type corresponding to the target command is the internal memory release command. The specified field may be a type field, and the second field may represent a field requesting resource release. Exemplarily, the second field may include 010, where the field "010" may represent the internal memory release command.

In this embodiment of this application, through the specified field in the target command, the command type corresponding to the target command may be determined, thereby improving the type determination efficiency of the target command.

In some embodiments of this application, step 102 may include the following steps:
Step 401: Acquire an internal memory mapping table and acquire internal memory allocation information based on the internal memory mapping table.

In this embodiment of this application, since the internal memory mapping table is configured for representing the internal memory allocation and usage status of the plurality of internal memory devices, the internal memory mapping table records the internal memory allocation information and internal memory usage information. The internal memory mapping table may map an internal memory allocation and application status between the hosts and the internal memory devices through table entries. The internal memory allocation information may include information such as a host identifier, an internal memory allocation starting address and an internal memory capacity corresponding to a host (i.e., a starting address and an internal memory capacity corresponding to an internal memory resource already allocated to the host), as well as an internal memory device identifier. The internal memory usage information may include information such as a usage status of allocated memory resources (including internal memory resources of different granularities obtained through dividing).

Step 402: Determine the first target resource from the internal memory resources corresponding to the internal memory devices based on the internal memory allocation information and the applied internal memory information carried in the target command.

In this embodiment of this application, when the host sends the target command to the bridging device, the target command may carry information that represents an actual resource demand of the host. In a case that the target command is the internal memory application command, the applied internal memory information is carried in the target command. The applied internal memory information is configured for representing information about internal memory resources to be requested by the host, including an internal memory size, an internal memory identifier, or the like. Therefore, the first target resource may be determined from the internal memory resources corresponding to the internal memory devices based on the applied internal memory information and the internal memory allocation information corresponding to the internal memory mapping table. Exemplarily, internal memory resources currently in an idle state may be determined based on the internal memory allocation information, and then an internal memory resource that meets an internal memory resource size represented by the applied internal memory information is selected from the internal memory resources in the idle state as the first target resource according to the applied internal memory information corresponding to the target command sent by the host.

In this embodiment of this application, the internal memory allocation information is determined based on the internal memory mapping table, a current internal memory allocation state is acquired, and then the first target resource allocated to the host is further determined based on the internal memory allocation information and the applied internal memory information. Accordingly, the available first target resource allocated to the host may be determined according to an actual internal memory allocation status in the internal memory device, thereby improving the resource allocation efficiency to a certain extent.

In some embodiments of this application, this embodiment of this application may further include the following steps:
Step 501: Divide the internal memory resources corresponding to the internal memory device into at least two internal memory blocks based on a first granularity.

In this embodiment of this application, granularity division may be performed on the internal memory resources corresponding to the internal memory device to obtain the internal memory blocks of different granularities. Based on the first granularity, the internal memory resources corresponding to the internal memory device are divided into the at least two internal memory blocks. Specifically, internal memory granularity division may be performed based on bits.

Step 502: For any internal memory block, divide the internal memory block into at least two sub-internal memory blocks based on a second granularity, the first granularity being greater than the second granularity.

In this embodiment of this application, fine granularity division is further performed on the internal memory blocks obtained through division based on the first granularity. For the any internal memory block, the internal memory block is further divided into the at least two sub-internal memory blocks based on the second granularity. In other words, the internal memory resources may be divided based on different granularities, and accordingly, resource allocation and management may be performed in units of the divided internal memory blocks or sub-internal memory blocks during the process of allocating and managing the internal memory resources. It should be understood that the sub-internal memory blocks are obtained by further dividing the internal memory block, and therefore, the first granularity may be greater than the second granularity to achieve coarse-grained and fine-grained dividing of the internal memory resources.

In a possible implementation, the first granularity may include granularities that meet a first granularity threshold, correspondingly, the second granularity may include granularities that meet a second granularity threshold, and a minimum threshold of the first granularity threshold is greater than a maximum threshold of the second granularity threshold. In other words, the internal memory resources corresponding to the internal memory devices may be divided based on different granularity standards to obtain a plurality of internal memory blocks of different granularities. Further, the internal memory block is further divided based on different granularity standards to obtain a plurality of sub-internal memory blocks of different granularities.

In this embodiment of this application, dividing the internal memory resources based on different granularities (the first granularity and the second granularity) may provide diversified internal memory resource options during resource management. By dividing the internal memory blocks, when the size of internal memory applied by the host is large,, resource allocation is facilitated. Moreover, through division of the sub-internal memory blocks, when t the size of internal memory by the host is small, allocating the sub-internal memory blocks to the host may prevent resource wastage and improve the resource utilization rate.

In some embodiments of this application, the applied internal memory information includes an applied internal memory size.

Correspondingly, step 402 may include the following steps:
Step 601: Determine internal memory blocks to be allocated and sub-internal memory blocks to be allocated based on the internal memory allocation information.

In this embodiment of this application, based on the internal memory allocation information, idle internal memory blocks or sub-internal memory blocks within the internal memory resources corresponding to the internal memory device are determined and determined as the internal memory blocks to be allocated and the sub-internal memory blocks to be allocated respectively. Specifically, based on host identifiers corresponding to allocated internal memory blocks and sub-internal memory blocks in the internal memory allocation information, internal memory blocks or sub-internal memory blocks without corresponding host identifiers are determined as the idle internal memory blocks or idle sub-internal memory blocks.

Step 602: In a case that an internal memory size of a target sub-internal memory block among the sub-internal memory blocks to be allocated is greater than or equal to the applied internal memory size, determine the target sub-internal memory block as the first target resource.

In this embodiment of this application, in the case that the internal memory size of the target sub-internal memory block among the sub-internal memory blocks to be allocated is greater than or equal to the applied internal memory size, it indicates that the target sub-internal memory block can provide the internal memory size required by the host, and therefore the target sub-internal memory block may be directly determined as the first target resource. It should be understood that in a case that there are a plurality of target sub-internal memory blocks in the sub-internal memory blocks to be allocated, the target sub-internal memory block corresponding to the internal memory device with a high idle degree may be determined as the first target resource based on the idle state of the internal memory device corresponding to each target sub-internal memory block, where the idle degree of the internal memory device is positively correlated with the number of the sub-internal memory blocks to be allocated corresponding to the internal memory device, and the high idle degree may indicate that the number of sub-internal memory blocks to be allocated contained in the internal memory device is large.

Step 603: In a case that an internal memory size of any sub-internal memory block to be allocated is smaller than the applied internal memory size and an internal memory size of a target internal memory block in the internal memory blocks to be allocated is greater than or equal to the applied internal memory size, determine the target internal memory block as the first target resource.

In this embodiment of this application, in a case that there is no sub-internal memory block to be allocated that meets the applied internal memory size, further determination may be performed based on the internal memory blocks to be allocated. In the case that the internal memory size of the target internal memory block among the internal memory blocks to be allocated is greater than or equal to the applied internal memory size, it indicates that the target internal memory block can provide the internal memory size required by the host, and therefore the target internal memory block may be directly determined as the first target resource. It should be understood that in a case that there are a plurality of target internal memory blocks in the internal memory blocks to be allocated, the target internal memory block corresponding to the internal memory device with a high idle degree may be determined as the first target resource based on the idle state of the internal memory device corresponding to each target internal memory block, where the idle degree of the internal memory device is positively correlated with the number of the internal memory blocks to be allocated corresponding to the internal memory device, and the high idle degree may indicate that the number of internal memory blocks to be allocated contained in the internal memory device is large.

In this embodiment of this application, whether there is a target sub-internal memory block that meets conditions is first determined based on fine-grained sub-internal memory blocks and the applied internal memory size. In a case that there is no target sub-internal memory block, a target internal memory block that meets the conditions is then selected based on coarse-grained internal memory blocks to complete the process of determining the first target resource. Accordingly, the matching internal memory block or sub-internal memory block may be selected as the first target resource on the premise of avoiding resource wastage.

In some embodiments of this application, step 402 may further include the following steps:
Step 604: In a case that internal memory sizes of any sub-internal memory block to be allocated and any internal memory block to be allocated are smaller than the applied internal memory size, determine a specified internal memory resource as the first target resource, the specified internal memory resource including at least two sub-internal memory blocks to be allocated, at least two internal memory blocks to be allocated, or the at least two internal memory blocks to be allocated and the at least two sub-internal memory blocks to be allocated.

In this embodiment of this application, in the case that the internal memory sizes of the any sub-internal memory block to be allocated and the any internal memory block to be allocated are smaller than the applied internal memory size, it indicates that a single internal memory block or sub-internal memory block cannot provide a sufficient internal memory size to the host. Therefore, combined allocation may be performed based on the at least two internal memory blocks and/or the at least two sub-internal memory blocks to meet the applied internal memory size required by the host. Specifically, the at least two sub-internal memory blocks to be allocated, the at least two internal memory blocks to be allocated, or the at least two internal memory blocks and the at least two sub-internal memory blocks to be allocated, with a total internal memory size greater than or equal to the applied internal memory size, may be selected as the first target resource.

In this embodiment of this application, in a case that the internal memory size of the single internal memory block or sub-internal memory block is smaller than the applied internal memory size, the first target resource is determined by combining the internal memory blocks and/or the sub-internal memory blocks, making a resource allocation mode in the resource management system more flexible and resource allocation more diverse.

In some embodiments of this application, after step 102, this embodiment of this application may further include the following steps:
Step 701: Mark, based on a first label, the first target resource in the internal memory mapping table as an allocated state.

In this embodiment of this application, after the first target resource is allocated to the host, the internal memory allocation information in the internal memory mapping table needs to be updated. Specifically, the first target resource in the internal memory mapping table may be marked based on the first label, and the first target resource marked based on the first label represents the allocated state. The first label is configured for representing that the internal memory resource marked with the first label is in the allocated state. Exemplarily, the first label may be a text label such as "allocated" or a logical numeric label such as "1".

Step 702: Update the internal memory mapping table based on first resource information corresponding to the first target resource.

In this embodiment of this application, the internal memory mapping table is updated based on the first resource information corresponding to the first target resource. Specifically, the first resource information may be integrated into the internal memory mapping table in the form of table entries. The first resource information may include a host identifier corresponding to a host to which the first target resource is allocated, a starting address corresponding to the first target resource, an internal memory device identifier corresponding to the first target resource, and the applied internal memory size.

In this embodiment of this application, in a case that the internal memory resources in the resource management system change, allocation and usage states of the internal memory resources in the internal memory mapping table are synchronously updated in time, and the internal memory mapping table may be dynamically updated, thereby ensuring the real-time performance of the allocation and usage state of the internal memory resources represented by the internal memory mapping table.

In some embodiments of this application, step 102 may include the following steps:
Step 801: Send a first signal to the switch matrix module.

In this embodiment of this application, the physical connection between the host and the internal memory resources is controlled based on the switch matrix module. Specifically, after the first target resource is determined, a first channel between a first internal memory device corresponding to the first target resource and the host may be enabled based on the switch matrix module. A corresponding channel is enabled or disconnected by controlling signals for switching. The first signal is sent to the switch matrix module in the bridging device. The first signal is configured for enabling the first channel between the first target resource and the host.

In this embodiment of this application, by controlling the physical connection between the host and the internal memory resources through the switch matrix module in the bridging device to enable or disconnect the corresponding channel, the efficiency of internal memory resource allocation and management in the resource management system may be improved.

In some embodiments of this application, this embodiment of this application may further include the following steps:
Step 901: Regularly acquire usage state information of at least two internal memory blocks and at least two sub-internal memory blocks in the resource management system, and update the internal memory mapping table based on the usage state information.

In this embodiment of this application, the usage state information of the at least two internal memory blocks and the at least two sub-internal memory blocks in the resource management system is regularly acquired. The usage state information may include information such as internal memory resource occupancy information, a resource occupancy duration, and a resource non-occupancy duration for the at least two internal memory blocks and the at least two sub-internal memory blocks. The internal memory usage information in the internal memory mapping table is updated based on the usage state information. Specifically, the usage state information acquired each time may be integrated into the internal memory mapping table in the form of table entries to update the internal memory usage information in the internal memory mapping table. Exemplarily, the usage state of the internal memory blocks at different granularities may be regularly read to determine the internal memory resource occupancy information (occupied or unoccupied) and time the usage state of the internal memory blocks to obtain the resource occupancy duration or the resource non-occupancy duration.

In this embodiment of this application, by regularly monitoring the usage state information of the at least two internal memory blocks and the at least two sub-internal memory blocks in the resource management system, dynamic management of the internal memory resources in the resource management system can be facilitated.

In some embodiments of this application, this embodiment of this application may further include the following steps:
Step 1001: Configure a specified internal memory block among the at least two internal memory blocks or a specified sub-internal memory block among the at least two sub-internal memory blocks as a shared internal memory space, the shared internal memory space being configured for data forwarding by at least two hosts.

In this embodiment of this application, the specified internal memory block among the at least two internal memory blocks or the specified sub-internal memory block among the at least two sub-internal memory blocks may be configured as the shared internal memory space. The shared internal memory space is configured for data forwarding by the at least two hosts. The at least two hosts may include all hosts in the resource management system or some hosts in the resource management system. It should be understood that in the resource management system, a plurality of shared internal memory spaces may be configured according to requirements, and this embodiment of the application imposes no limitations in this regard.

Exemplarily, a 2-megabyte (MB) internal memory space starting from the address 0x1000_0000 in the resource management system may be configured as the shared internal memory space. Both a host 1 and a host 2 in the resource management system may use the shared internal memory space. For example, the host 1 may write data to the shared internal memory space, and the host 2 may directly read content in the shared internal memory space to achieve data forwarding.

In this embodiment of this application, the at least two hosts may be allowed to share the same shared internal memory space to achieve data forwarding between the at least two hosts.

In some embodiments of this application, step 103 may include the following steps:
Step 1101: Acquire internal memory address information carried in the target command and configured for indicating the second target resource.

In this embodiment of this application, when the host sends the target command to the bridging device, the target command may carry information that represents an actual resource demand of the host. In a case that the target command is the internal memory release command, the internal memory address information corresponding to the second target resource to be released by the host is carried in the target command. The internal memory address information is configured for indicating the second target resource that the host needs to release.

Step 1102: Disable, based on the internal memory address information, the second channel between the second target resource and the host through the switch matrix module.

In this embodiment of this application, the second target resource that needs to be released is determined from the resource management system based on the internal memory address information. The second target resource may include internal memory blocks and/or sub-internal memory blocks. After the second target resource is determined, the second channel between the second target resource and the host may be disabled based on the switch matrix module, to release the second target resource.

In this embodiment of this application, by determining the second target resource through the internal memory address information and disabling the second channel between the second target resource and the host, the bridging device may directly perform corresponding internal memory release processing based on the target command, thereby improving the efficiency of internal memory release.

In some embodiments of this application, after step 103, this embodiment of this application may include the following steps:
Step 1201: Mark, based on a second label, the second target resource in the internal memory mapping table as an unallocated state.

In this embodiment of this application, after the second target resource indicated by the host is released, the internal memory allocation information in the internal memory mapping table needs to be updated. Specifically, the second target resource in the internal memory mapping table may be marked based on the second label, and the second target resource marked based on the second label represents the unallocated state, namely the idle state. The second label is configured for representing that the internal memory resource marked with the second label is in the unallocated state. Exemplarily, the second label may be a text label such as "unallocated" or a logical numeric label such as "0".

Step 1202: Delete second resource information corresponding to the second target resource from the internal memory mapping table.

In this embodiment of this application, the internal memory mapping table is updated based on the second resource information corresponding to the second target resource. Specifically, the second resource information included in the internal memory mapping table may be deleted. The second resource information may include a host identifier corresponding to a host to which the second target resource is allocated, a starting address corresponding to the second target resource, an internal memory device identifier corresponding to the second target resource, and the applied internal memory size. It should be understood that after the second resource information in the internal memory mapping table is deleted, the second resource information may be saved as historical allocation information corresponding to the second target resource.

In this embodiment of this application, in a case that the internal memory resources in the resource management system change, allocation and usage states of the internal memory resources in the internal memory mapping table are synchronously updated in time, and the internal memory mapping table may be dynamically updated, thereby ensuring the real-time performance of the allocation and usage state of the internal memory resources represented by the internal memory mapping table.

In some embodiments of this application, step 1102 may include the following steps:
Step 1301: Determine the second target resource based on the internal memory address information, and send a second signal to the switch matrix module, the second signal being configured for disabling the second channel between the second target resource and the host.

In this embodiment of this application, the physical connection between the host and the internal memory resources may be controlled based on the switch matrix module. Specifically, the second target resource may be determined from the internal memory resources in the resource management system based on the internal memory address information, and after the second target resource is determined, the second channel between a second internal memory device corresponding to the second internal memory resource and the host may be disabled based on the switch matrix module. A corresponding channel is enabled or disconnected by controlling signals for switching. The second signal is sent to the switch matrix module in the bridging device. The second signal is configured for disabling the second channel between the second target resource and the host.

In this embodiment of this application, by controlling the physical connection between the host and the internal memory resources through the switch matrix module in the bridging device to enable or disconnect the corresponding channel, the efficiency of internal memory resource allocation and management in the resource management system may be improved.

In some embodiments of this application, this embodiment of this application may further include the following steps:
Step 1401: If it is detected that any allocated internal memory block or allocated sub-internal memory block is not occupied for a preset duration, send a release request to a target host corresponding to the allocated internal memory block or the allocated sub-internal memory block.

The allocated internal memory block is an internal memory block marked with the first label in the internal memory mapping table, and the allocated sub-internal memory block is a sub-internal memory block marked with the first label in the internal memory mapping table; and the release request is configured for requesting the target host to send an internal memory release command for the allocated internal memory block or the allocated sub-internal memory block to the bridging device.

In this embodiment of this application, the bridging device may monitor an internal memory usage state of the allocated internal memory blocks or allocated sub-internal memory blocks in the resource management system based on the internal memory mapping table. The allocated internal memory blocks or allocated sub-internal memory blocks may be determined based on the first label in the internal memory mapping table. The internal memory blocks marked with the first label are determined as the allocated internal memory blocks, and the sub-internal memory blocks marked with the first label are determined as the allocated sub-internal memory blocks. If it is detected that any allocated internal memory block or allocated sub-internal memory block is not occupied for the preset duration, it represents that there may be resource wastage in the internal memory space of the allocated internal memory block or allocated sub-internal memory block, and therefore the release request may be sent to the target host corresponding to the allocated internal memory block or allocated sub-internal memory block that is not occupied for the preset duration. The preset duration may be set according to requirements, which is not limited in this embodiment of this application. The release request is configured for requesting the target host to agree to release the allocated internal memory block or allocated sub-internal memory block that is not occupied for the preset duration and send the internal memory release command for the allocated internal memory block or allocated sub-internal memory block to the bridging device.

In a possible implementation, in a case that a cumulative unused duration corresponding to any allocated internal memory block or allocated sub-internal memory block is greater than a preset duration threshold, the release request may be sent to the target host corresponding to the allocated internal memory block or allocated sub-internal memory block.

In this embodiment of this application, by detecting an occupancy status of the allocated internal memory blocks and the allocated sub-internal memory blocks, the bridging device actively negotiates resource release with the target host for the allocated internal memory blocks or allocated sub-internal memory blocks that are not occupied for a long time. That is, the resource management method in this embodiment of this application provides two resource release approaches: the host actively initiating a resource release request and the bridging device actively negotiating resource release with the host, thereby improving the diversity of resource release approaches and also improving the resource utilization rate to a certain extent.

Exemplarily, this embodiment of the application provides a schematic table of an internal memory mapping table describing two internal memory devices (an internal memory device 1 and an internal memory device 2, respectively), as shown in the following table:

| Uniform Address | Internal memory device identifier | Internal memory block | Sub-internal memory block | Starting address | Internal memory block allocatio n status | Sub-internal memory block allocation status | Host identifier |
|---|---|---|---|---|---|---|---|
| 0x...000 00000 | 1 | 00 | 000 | 0x00000 000 | 0 | 0 | |
| | | | 001 | 0x20000 000 | | 1 | 4 |
| | | | 010 | 0x40000 000 | | 0 | |
| | | | 011 | 0x60000 000 | | 1 | 3 |
| | | 01 | 100 | 0x80000 000 | 1 | 1 | 2 |
| | | | 101 | 0xa0000 000 | | 1 | 2 |
| | | | 110 | 0xc0000 000 | | 1 | 2 |
| | | | 111 | 0xe0000 000 | | 1 | 2 |
| | | 00 | 000 | 0x00000 000 | 1 | 1 | 1 |
| | | | 001 | 0x20000 000 | | 1 | 1 |
| | | | 010 | 0x40000 000 | | 1 | 1 |
| | | | 011 | 0x60000 000 | | 1 | 1 |
| | | 01 | 100 | 0x80000 000 | 0 | 0 | |
| | | | 101 | 0xa0000 000 | | 0 | |
| | | | 110 | 0xc0000 000 | | 0 | |
| | | | 111 | 0xe0000 000 | | 1 | 6 |

The foregoing internal memory mapping table can reflect the following information: dividing each of the internal memory device 1 and the internal memory device 2 into two internal memory blocks 00 and 01, and further dividing the internal memory blocks to obtain sub-internal memory blocks. One internal memory device is divided into two internal memory blocks and then into eight sub-internal memory blocks. A logical identifier1 indicates that the internal memory block or sub-internal memory block is allocated, and a logical identifier 0 indicates that the internal memory block or sub-internal memory block is unallocated. A sub-internal memory block 001 in the internal memory device 1 is allocated to a host 4, and a sub-internal memory block 011 in the internal memory device 1 is allocated to a host 3. The internal memory block 01 in the internal memory device 1 is allocated to the host 2. It should be understood that the sub-internal memory blocks 100/101/110/111 included in the internal memory block 01 are allocated to the host 2. The internal memory block 00 in the internal memory device 2 is allocated to the host 1. It should be understood that the sub-internal memory blocks 000/001/010/011 included in the internal memory block 00 are allocated to the host 1. The sub-internal memory block 111 in the internal memory device 2 is allocated to a host 6. It should be understood that the content of the foregoing internal memory mapping table is merely an example. Specific forms and relevant content settings of the internal memory mapping table may be customized according to requirements, and this embodiment of the application imposes no limitations in this regard.

Exemplarily, Fig. 4 is a flowchart of specific steps of a resource management method according to an embodiment of this application. As shown in Fig. 4, in response to a target command sent by a host, a command type corresponding to the target command is determined, and a host identifier corresponding to the host is acquired; in a case that the target command is the internal memory application command, applied internal memory information carried in the target command is determined, a first target resource that needs to be allocated to the host is determined in internal memory resources corresponding to an internal memory device based on the applied internal memory information and internal memory allocation information corresponding to an internal memory mapping table, and the switch matrix module is controlled to enable a first channel between the first target resource and the host to complete resource allocation to the host. After the first target resource is allocated to the host, the internal memory mapping table is updated; and in a case that the target command is the internal memory release command, internal memory address information carried in the target command is acquired, a second target resource is determined in the internal memory resources corresponding to the internal memory device based on the internal memory address information, and the switch matrix module is controlled to disable a second channel between the second target resource and the host to complete resource release of the second target resource indicated by the host. After the second target resource is released, the internal memory allocation information is updated.

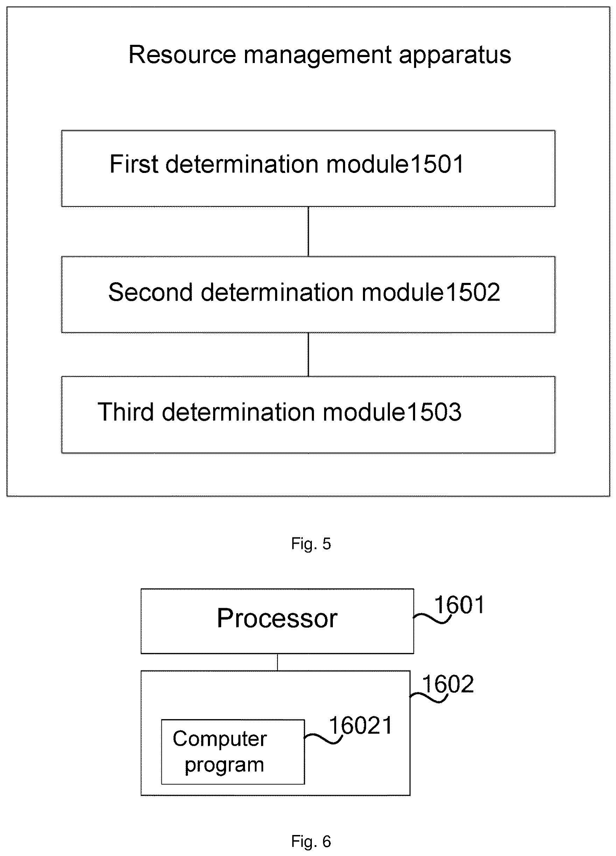

Fig. 5 is a schematic structural diagram of a resource management apparatus according to an embodiment of this application. As shown in Fig. 5, the apparatus is applied to a bridging device based on the compute express link technology in a resource management system. The bridging device is configured to establish connections between hosts and internal memory devices in the resource management system. The bridging device includes an instruction parsing module, an internal memory mapping table, and a switch matrix module, which may specifically include:
a first determination module 1501, configured to, in response to a target command sent by a host, determine, by the instruction parsing module, a command type corresponding to the target command, the command type including an internal memory application command and an internal memory release command;
a second determination module 1502, configured to determine, in a case that the target command is the internal memory application command, a first target resource allocated to the host based on the internal memory mapping table, and enable a first channel between the first target resource and the host based on the switch matrix module, the internal memory mapping table being configured for representing an internal memory allocation and usage status of the internal memory devices; and
a third determination module 1503, configured to determine, in a case that the target command is the internal memory release command, a second target resource indicated by the internal memory release command, and disable a second channel between the second target resource and the host based on the switch matrix module.

In some embodiments of this application, the apparatus includes:
a first acquiring module, configured to acquire device information corresponding to the internal memory devices, the device information including a device capacity, a device starting address, and a device identifier corresponding to each internal memory device; and
a first allocation module, configured to pre-allocate address spaces for the internal memory devices according to a contiguous allocation rule.

In some embodiments of this application, the first determination module 1501 includes:
a first determination submodule, configured to determine, by the instruction parsing module, that the command type corresponding to the target command is the internal memory application command in a case that a specified field in the target command is a first field; and
a second determination submodule, configured to determine, by the instruction parsing module, that the command type corresponding to the target command is the internal memory release command in a case that the specified field in the target command is a second field.

In some embodiments of this application, the second determination module 1502 includes:
a second acquiring module, configured to acquire the internal memory mapping table and acquire internal memory allocation information based on the internal memory mapping table; and
a fourth determination module, configured to determine the first target resource from the internal memory resources corresponding to the internal memory devices based on the internal memory allocation information and applied internal memory information carried in the target command.

In some embodiments of this application, the apparatus includes:
a first division module, configured to divide the internal memory resources corresponding to the internal memory device into at least two internal memory blocks based on a first granularity;
a second division module, configured to divide, for any internal memory block, the internal memory block into at least two sub-internal memory blocks based on a second granularity, the first granularity being greater than the second granularity.

In some embodiments of this application, the applied internal memory information includes an applied internal memory size. The fourth determination module includes:
a third determination submodule, configured to determine internal memory blocks to be allocated and sub-internal memory blocks to be allocated based on the internal memory allocation information;
a fourth determination submodule, configured to, in a case that an internal memory size of a target sub-internal memory block among the sub-internal memory blocks to be allocated is greater than or equal to the applied internal memory size, determine the target sub-internal memory block as the first target resource; and
a fifth determination submodule, configured to, in a case that an internal memory size of any sub-internal memory block to be allocated is smaller than the applied internal memory size and an internal memory size of a target internal memory block in the internal memory blocks to be allocated is greater than or equal to the applied internal memory size, determine the target internal memory block as the first target resource.

In some embodiments of this application, the fourth determination module further includes:
a sixth determination submodule, configured to, in a case that internal memory sizes of any sub-internal memory block to be allocated and any internal memory block to be allocated are smaller than the applied internal memory size, determine a specified internal memory resource as the first target resource, the specified internal memory resource including at least two sub-internal memory blocks to be allocated, at least two internal memory blocks to be allocated, or the at least two internal memory blocks to be allocated and the at least two sub-internal memory blocks to be allocated.

In some embodiments of this application, the apparatus further includes:
a first mark module, configured to mark, based on a first label, the first target resource in the internal memory mapping table as an allocated state; and
a first update module, configured to update the internal memory mapping table based on first resource information corresponding to the first target resource.

In some embodiments of this application, the second determination module 1502 includes:
a first sending module, configured to send a first signal to the switch matrix module,
the first signal being configured for enabling the first channel between the first target resource and the host.

In some embodiments of this application, the apparatus further includes:
a second update module, configured to regularly acquire usage state information of at least two internal memory blocks and at least two sub-internal memory blocks in the resource management system, and update the internal memory mapping table based on the usage state information.

In some embodiments of this application, the apparatus further includes:
a first configuration module, configured to configure a specified internal memory block among the at least two internal memory blocks or a specified sub-internal memory block among the at least two sub-internal memory blocks as a shared internal memory space, the shared internal memory space being configured for data forwarding by at least two hosts.

In some embodiments of this application, the third determination module 1503 includes:
a third acquiring module, configured to acquire internal memory address information carried in the target command and configured for indicating the second target resource; and
a first disable module, configured to disable, based on the internal memory address information, the second channel between the second target resource and the host through the switch matrix module.

In some embodiments of this application, the apparatus further includes:
a second mark module, configured to mark, based on a second label, the second target resource in the internal memory mapping table as an allocated state; and
a first delete module, configured to delete second resource information corresponding to the second target resource from the internal memory mapping table.

In some embodiments of this application, the first disable module includes:
a second sending module, configured to determine the second target resource based on the internal memory address information, and send a second signal to the switch matrix module, the second signal being configured for disabling the second channel between the second target resource and the host.

In some embodiments of this application, the apparatus further includes:
if it is detected that any allocated internal memory block or allocated sub-internal memory block is not occupied for a preset duration, sending a release request to a target host corresponding to the allocated internal memory block or allocated sub-internal memory block,
where the allocated internal memory block is an internal memory block marked with the first label in the internal memory mapping table, and the allocated sub-internal memory block is a sub-internal memory block marked with the first label in the internal memory mapping table; and the release request is configured for requesting the target host to send an internal memory release command for the allocated internal memory block or allocated sub-internal memory block to the bridging device.

This application further provides an electronic device. Referring to Fig. 6, a processor 1601, a memory 1602, and a computer program 16021 stored on the memory and running on the processor are included. The processor, when executing the program, implements the resource management method in the foregoing embodiments.

This application further provides a non-volatile readable storage medium. Instructions in the non-volatile readable storage medium, when executed by a processor of an electronic device, cause the electronic device to perform the resource management method in the foregoing embodiments.

Since the apparatus embodiments are substantially similar to the method embodiments, the descriptions are brief, and for relevant parts, reference may be made to some descriptions in the method embodiments.

The algorithms and displays provided herein are not inherently related to any particular computer, virtual system, or other devices. Various general-purpose systems may also be used with the teachings herein. According to the foregoing descriptions, structures required to construct such systems are apparent. Further, this application is not directed to any specific programming language. It should be understood that various programming languages may be used to implement the content of this application as described herein, and the descriptions of specific languages above are provided to disclose the optimal implementation of this application.

In the specification provided herein, a large number of specific details are described. However, it should be understood that the embodiments of this application may be practiced without these specific details. In some examples, well-known methods, structures, and technologies are not shown in detail to avoid obscuring the understanding of this specification.

Similarly, it should be understood that, to simplify this application and aid in understanding one or more inventive aspects, various features of this application are sometimes grouped together in a single embodiment, figure, or description thereof in the foregoing descriptions of the exemplary embodiments of this application. However, the disclosed methods should not be interpreted as reflecting the following intention that the claimed application requires more features than those explicitly recited in each claim. More precisely, as reflected in the following claims, the inventive aspects lie in fewer than all the features of any single embodiment disclosed above. Therefore, the claims following the specific implementations are hereby expressly incorporated into the specific implementations, with each claim itself constituting a separate embodiment of this application.

Those skilled in the art should understand that the modules in the device in one embodiment may be adaptively changed and arranged in one or more devices different from those in this embodiment. The modules or units or components in the embodiments may be combined into a single module or unit or component, and further, they may be divided into a plurality of submodules or sub-units or sub-components. Except where at least some of the features and/or processes or units are mutually exclusive, all features disclosed in this specification (including the accompanying claims, abstract, and accompanying drawings), as well as all processes or units of any method or device disclosed herein, may be combined in any mode. Unless otherwise explicitly stated, each feature disclosed in this specification (including the accompanying claims, abstract, and accompanying drawings) may be replaced by alternative features providing the same, equivalent, or similar purpose.

The various component embodiments of this application may be implemented in hardware, or software modules running on one or more processors, or a combination thereof. Those skilled in the art should understand that some or all of the functions of some or all of the components in a sorting device according to this application may be implemented in practice using a microprocessor or digital signal processing (DSP). This application may also be implemented as a device or apparatus program for executing some or all of the methods described herein. The program for implementing this application may be stored on a computer-readable medium or may take the form of one or more signals. The signals may be downloaded from an Internet website, provided on a carrier signal, or offered in any other form.

It should be noted that the foregoing embodiments illustrate rather than limit this application, and those skilled in the art can design alternative embodiments without departing from the scope of the appended claims. In the claims, any reference symbols placed between parentheses should not be construed as limiting the claims. The word "include" does not exclude the presence of elements or steps not listed in the claims. The use of the word "a" or "one" preceding an element does not exclude the presence of a plurality of such elements. This application may be implemented by means of hardware including a plurality of different elements and by means of a suitably programmed computer. In a unit claim enumerating a plurality of apparatuses, some of these apparatuses may be specifically embodied by the same hardware item. The use of the words first, second, third, etc., does not indicate any order. These words may be interpreted as names.

Those skilled in the art may clearly understand that, for convenience and brevity of description, for the specific operation processes of the system, the device, and the units described above, reference may be made to the corresponding processes in the foregoing method embodiments, and details are not described herein again.

It should be noted that all actions of acquiring signals, information, or data in this application are carried out under the premise of complying with corresponding data protection laws and policies of the country where they are located, and are authorized by an owner of a corresponding apparatus.

The foregoing descriptions are merely preferred embodiments of this application, but are not intended to limit this application. Any modification, equivalent substitution, improvement, etc. made within the spirit and principle of this application shall fall within the scope of protection of this application.

The foregoing descriptions are merely specific implementations of this application, but the scope of protection of this application is not limited thereto; and modifications or substitutions readily conceivable by those skilled in the art within the technical scope disclosed by this application shall fall within the scope of protection of this application. Therefore, the scope of protection of this application shall take the scope of protection of the claims as final.

## Claims

1. A resource management method, applied to a bridging device based on a compute express link (CXL) technology in a resource management system, the bridging device being configured to establish connections between hosts and internal memory devices in the resource management system, and the bridging device comprising an internal memory mapping table; and the method comprising:
determining, in response to a target command sent by a host, a command type corresponding to the target command, the command type comprising an internal memory application command and an internal memory release command;
determining, in a case that the target command is the internal memory application command, a first target resource allocated to the host based on the internal memory mapping table, and enabling a first channel between the first target resource and the host, the internal memory mapping table being configured for representing an internal memory allocation and usage status of the internal memory devices; and
determining, in a case that the target command is the internal memory release command, a second target resource indicated by the internal memory release command, and disabling a second channel between the second target resource and the host.

2. The method according to claim 1, further comprising:
acquiring device information corresponding to the internal memory devices, the device information comprising a device capacity, a device starting address, and a device identifier corresponding to each internal memory device; and
pre-allocating address spaces for the internal memory devices according to a contiguous allocation rule.

3. The method according to claim 1, wherein the determining, in response to a target command sent by the host, a command type corresponding to the target command comprises:
determining that the command type corresponding to the target command is the internal memory application command in a case that a specified field in the target command is a first field; and
determining that the command type corresponding to the target command is the internal memory release command in a case that the specified field in the target command is a second field.

4. The method according to claim 1, wherein the determining a first target resource allocated to the host based on the internal memory mapping table comprises:
acquiring the internal memory mapping table and acquiring internal memory allocation information based on the internal memory mapping table; and
determining the first target resource from internal memory resources corresponding to the internal memory devices based on the internal memory allocation information and applied internal memory information carried in the target command.

5. The method according to claim 4, further comprising:
dividing the internal memory resources corresponding to the internal memory device into at least two internal memory blocks based on a first granularity; and
dividing, for any internal memory block, the internal memory block into at least two sub-internal memory blocks based on a second granularity, the first granularity being greater than the second granularity.

6. The method according to claim 5, wherein the applied internal memory information comprises an applied internal memory size; and the determining the first target resource from internal memory resources corresponding to the internal memory devices based on the internal memory allocation information and applied internal memory information carried in the target command comprises:
determining internal memory blocks to be allocated and sub-internal memory blocks to be allocated based on the internal memory allocation information;
in a case that an internal memory size of a target sub-internal memory block among the sub-internal memory blocks to be allocated is greater than or equal to the applied internal memory size, determining the target sub-internal memory block as the first target resource; and
in a case that an internal memory size of any sub-internal memory block to be allocated is smaller than the applied internal memory size, and an internal memory size of a target internal memory block in the internal memory blocks to be allocated is greater than or equal to the applied internal memory size, determining the target internal memory block as the first target resource.

7. The method according to claim 6, wherein the determining the first target resource from internal memory resources corresponding to the internal memory devices based on the internal memory allocation information and applied internal memory information carried in the target command comprises:
in a case that internal memory sizes of any sub-internal memory block to be allocated and any internal memory block to be allocated are smaller than the applied internal memory size, determining a specified internal memory resource as the first target resource, the specified internal memory resource comprising: at least two sub-internal memory blocks to be allocated, at least two internal memory blocks to be allocated, or the at least two internal memory blocks to be allocated and the at least two sub-internal memory blocks to be allocated.

8. The method according to claim 6, wherein after the determining a first target resource allocated to the host based on the internal memory mapping table and the enabling a first channel between the first target resource and the host, the method further comprises:
marking, based on a first label, the first target resource in the internal memory mapping table as an allocated state; and
updating the internal memory mapping table based on first resource information corresponding to the first target resource.

9. The method according to claim 8, wherein the first resource information comprises a host identifier corresponding to the host, a starting address corresponding to the first target resource, an internal memory device identifier corresponding to the first target resource, and the applied internal memory size.

10. The method according to claim 1, wherein the enabling a first channel between the first target resource and the host comprises:
sending a first signal, the first signal being configured for enabling the first channel between the first target resource and the host.

11. The method according to claim 10, wherein the first target resource is configured for allowing the host to access and write to the first target resource.

12. The method according to claim 5, further comprising:
regularly acquiring usage state information of at least two internal memory blocks and at least two sub-internal memory blocks in the resource management system, and updating the internal memory mapping table based on the usage state information.

13. The method according to claim 5, further comprising:
configuring a specified internal memory block among the at least two internal memory blocks or a specified sub-internal memory block among the at least two sub-internal memory blocks as a shared internal memory space, the shared internal memory space being configured for data forwarding by at least two hosts.

14. The method according to claim 1, wherein the determining a second target resource indicated by the internal memory release command, and disabling a second channel between the second target resource and the host comprises:
acquiring internal memory address information carried in the target command and configured for indicating the second target resource; and
disabling, based on the internal memory address information, the second channel between the second target resource and the host.

15. The method according to claim 1, wherein after the determining a second target resource indicated by the internal memory release command, and disabling a second channel between the second target resource and the host, the method further comprises:
marking, based on a second label, the second target resource in the internal memory mapping table as an unallocated state; and
deleting second resource information corresponding to the second target resource from the internal memory mapping table.

16. The method according to claim 14, wherein the disabling, based on the internal memory address information, the second channel between the second target resource and the host comprises:
determining the second target resource based on the internal memory address information, and sending a second signal, the second signal being configured for disabling the second channel between the second target resource and the host.

17. The method according to claim 8, further comprising:
in a case that any allocated internal memory block or allocated sub-internal memory block is detected to have been not occupied for a preset duration, sending a release request to a target host corresponding to the allocated internal memory block or the allocated sub-internal memory block,
wherein the allocated internal memory block is an internal memory block marked with the first label in the internal memory mapping table, and the allocated sub-internal memory block is a sub-internal memory block marked with the first label in the internal memory mapping table; and the release request is configured for requesting the target host to send an internal memory release command for the allocated internal memory block or the allocated sub-internal memory block to the bridging device.

18. A resource management apparatus, applied to a bridging device based on a CXL technology in a resource management system, wherein the bridging device is configured to establish connections between hosts and internal memory devices in the resource management system, and the bridging device comprises an instruction parsing module, an internal memory mapping table, and a switch matrix module; and the apparatus comprises:
a first determination module, configured to, in response to a target command sent by a host, determine, by the instruction parsing module, a command type corresponding to the target command, the command type comprising an internal memory application command and an internal memory release command;
a second determination module, configured to determine, in a case that the target command is the internal memory application command, a first target resource allocated to the host based on the internal memory mapping table, and enable a first channel between the first target resource and the host based on the switch matrix module, the internal memory mapping table being configured for representing an internal memory allocation and usage status of the internal memory devices; and
a third determination module, configured to determine, in a case that the target command is the internal memory release command, a second target resource indicated by the internal memory release command, and disable a second channel between the second target resource and the host based on the switch matrix module.

19. An electronic device, comprising:
a processor, a memory, and a computer program that is stored on the memory and runnable on the processor, the processor, when executing the program, implementing the resource management method according to any one of claims 1 to 17.

20. A non-volatile readable storage medium, when instructions in the non-volatile readable storage medium executed by a processor of an electronic device, cause the electronic device to perform the resource management method according to one or more of claims 1 to 17.
